# EUROPEAN PATENT APPLICATION

(11) **EP 3 578 936 A1**
(43) Date of publication of application: **11.12.2019**
(21) Application number: 18747586.8
(22) Date of filing: 23.01.2018
(51) Int. Cl.: G01H 1/00, G01V 1/30

(54) **SEISMIC DEVICE AND SAFETY DEVICE EMPLOYING SAME**

(30) Priority: 03.02.2017 JP 2017018158
(71) Applicant: Panasonic Intellectual Property Management Co., Ltd., Osaka-shi, Osaka 540-6207 (JP)
(72) Inventor: TAKAHASHI, Yukihide, Osaka-shi, Osaka 540-6207 (JP); MURASE, Kouji, Osaka-shi, Osaka 540-6207 (JP); KONISHI, Ryohei, Osaka-shi, Osaka 540-6207 (JP); KITANO, Yusuke, Osaka,shi, Osaka 540-6207 (JP)
(74) Representative: SSM Sandmair
(86) International application number: PCT/JP2018/001858
(87) International publication number: WO 2018/142996

(57) **Abstract**

Seismic device includes acceleration sensor (10) that successively outputs an acceleration value according to magnitude of acceleration of applied vibrations, earthquake determining unit (11) that differentiates and determines an earthquake and a shock from the acceleration value output from acceleration sensor (10), and seismic intensity calculator (12) that calculates a seismic intensity equivalent value from the acceleration value output from acceleration sensor (10). Further, earthquake determining unit (11) differentiates and determines an earthquake and a shock from a generation pattern of binary values (0 and 1) binarizing the acceleration value output from acceleration sensor (10) with the predetermined threshold value.

## Description

### TECHNICAL FIELD

The present invention relates to a seismic device capable of differentiating an earthquake and a shock, and a safety device employing the same.

### BACKGROUND ART

Among gas shutoff devices having a function to shutoff gas when abnormality occurs, there are ones equipped with a safety function to shut off gas when an earthquake is detected, and various seismic devices for detecting an earthquake have been proposed.

In such a gas shutoff device, it is preferable that a shutoff not be performed when it is not an earthquake in order to prevent unnecessary gas shutoff. It is necessary to prevent that a shock or the like transmitted through gas piping that occurs on a daily basis is determined as an earthquake to perform a shutoff, and a seismic device having a function to discriminate between an earthquake and a shock has also been proposed (for example, see PTL 1).

The seismic device described in PTL 1 uses a seismoscope that generates repetitive signals of ON and OFF by vibrations at a prescribed acceleration or higher. This seismic device focuses on that seismic waves generally vary irregularly in both cycle and amplitude, but shock waves have a waveform that is in the same cycles and has amplitude that gradually attenuates over time. That is, an earthquake and a shock are differentiated by utilizing the fact that respective time widths of ON and OFF signals of the seismoscope are also irregular for vibrations of an earthquake, while vibrations when a shock occurs exhibit regularity as an overall tendency such that a time width for ON gradually decreases and a time width for OFF gradually increases.

### Citation List

### Patent Literature

PTL 1: Unexamined Japanese Patent Publication No. H3-18787

### SUMMARY OF THE INVENTION

However, since the seismic device described in PTL 1 uses a seismoscope that generates repetitive signals of ON and OFF by vibrations at a prescribed acceleration or higher, it is necessary to distinguish an earthquake and a shock and determine the magnitude of an earthquake by ON and OFF times and cycles, and there have been cases where the magnitude of an earthquake cannot be accurately determined. Further, since the prescribed acceleration is determined by the structure of the seismoscope, it is not possible to cope with various seismic vibration patterns and shocks, and thus there is also a possibility of misjudgment.

The present invention provides a seismic device capable of performing discrimination of an earthquake and a shock with high precision and calculating intensity of an earthquake by using an acceleration sensor.

A seismic device according to the present invention includes an acceleration sensor that successively outputs an acceleration value corresponding to a magnitude of acceleration of vibration applied to the seismic device, an earthquake determining unit that determine whether the vibration is an earthquake or a shock from the acceleration value output from the acceleration sensor, and a seismic intensity calculator that calculates a seismic intensity equivalent value from the acceleration value output from the acceleration sensor.

This configuration enables to perform discrimination of an earthquake and a shock with high precision, and calculate intensity of an earthquake. Further, a malfunction of a safety device using this seismic device can be prevented.

### BRIEF DESCRIPTION OF DRAWINGS

FIG. 1 is a block diagram of a seismic device according to a first exemplary embodiment.
FIG. 2A is an acceleration waveform graph due to seismic vibrations.
FIG. 2B is an acceleration waveform graph due to shock vibrations.
FIG. 3A is a graph illustrating an acceleration waveform due to seismic vibrations and binarization of the acceleration waveform.
FIG. 3B is a graph illustrating an acceleration waveform due to shock vibrations and binarization of the acceleration waveform.
FIG. 4A is a graph illustrating an acceleration waveform due to seismic vibrations and binarization of the acceleration waveform.
FIG. 4B is a graph illustrating an acceleration waveform due to shock vibrations and binarization of the acceleration waveform.
FIG. 5 is a graph illustrating an acceleration waveform due to shock vibrations detected by a seismic device according to a second exemplary embodiment and binarization of the acceleration waveform.
FIG. 6 is a block diagram of a seismic device according to a third exemplary embodiment.
FIG. 7 is a block diagram of a seismic device according to a fourth exemplary embodiment.
FIG. 8 is a configuration diagram of a gas shutoff device as a safety device in a fifth exemplary embodiment.

### DESCRIPTION OF EMBODIMENTS

Exemplary embodiments of the present invention will hereinafter be described with reference to the drawings. Note that the present invention is not limited to the exemplary embodiments.

### (First Exemplary Embodiment)

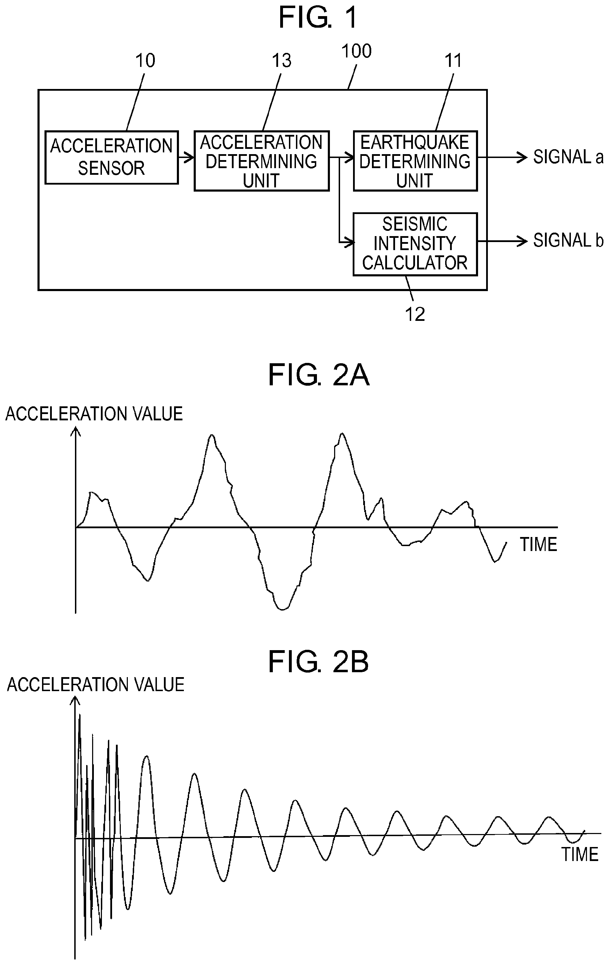

FIG. 1 illustrates a block diagram of a seismic device according to a first exemplary embodiment.

In FIG. 1, acceleration sensor 10 detects vibrations of an earthquake or the like and successively outputs an acceleration value according to acceleration. Earthquake determining unit 11 differentiates and discriminates an earthquake and a shock from the acceleration value output from acceleration sensor 10. Seismic intensity calculator 12 uses the acceleration value output from acceleration sensor 10 to calculate a seismic intensity equivalent value by a predetermined calculation method. Acceleration determining unit 13 determines that acceleration sensor 10 outputs an acceleration value more than or equal to a predetermined value. When acceleration determining unit 13 determines that the acceleration value is more than or equal to the predetermined value, acceleration determining unit 13 outputs the acceleration value to earthquake determining unit 11 and seismic intensity calculator 12, and instructs them to perform determination and calculation.

By instruction of acceleration determining unit 13, earthquake determining unit 11 and seismic intensity calculator 12 execute determination and calculation for a predetermined period, and output an earthquake determination signal (signal a) indicating whether there is an earthquake and a seismic intensity equivalent value (signal b) indicating magnitude of seismic intensity. Earthquake determining unit 11, seismic intensity calculator 12, and acceleration determining unit 13 can be implemented by processing of a microcomputer (not illustrated).

FIG. 2A illustrates an acceleration waveform by seismic vibrations that can be obtained by acceleration sensor 10, and FIG. 2B illustrates an example of an acceleration waveform by vibrations when a shock is received (hereinafter referred to as shock vibrations) that can be obtained by acceleration sensor 10. FIG. 2B particularly exemplifies an acceleration waveform by shock vibrations measured by a seismic device mounted in a gas shutoff device connected to piping. In this case, a housing of the gas shutoff device is affected by a natural frequency of the piping, and thus the vibrations continue.

As illustrated in the graphs, vibration patterns of acceleration of an earthquake and a shock are obviously different, and the waveform by an earthquake exhibits an irregular vibration pattern while the waveform by a shock has a substantially constant cycle except an initial period when the shock is applied and has a tendency to gradually attenuate.

Earthquake determining unit 11 differentiates and discriminates an earthquake and a shock by utilizing that vibration waveforms are different between an earthquake and a shock.

The seismic intensity equivalent value calculated by seismic intensity calculator 12 is a measured seismic intensity set forth by Japan Meteorological Agency as an index value of magnitude of an earthquake or an SI value as an index for measuring what degree earthquake motion causes damage to buildings, or the like and can be calculated based on the acceleration value output by acceleration sensor 10.

Further, the earthquake determination and the seismic intensity equivalent value are calculated when a predetermined acceleration is detected by acceleration determining unit 13, that is, only when vibrations occur, and thus it is possible to suppress power consumed for determination and calculation. The calculation of the seismic intensity equivalent value in particular is implemented with a complicated numerical calculation process, and thus acceleration determining unit 13 is useful because it reduces power consumption of the microcomputer and suppresses consumption of a battery as a power supply.

With a configuration described above, it is possible to achieve a seismic device capable of discriminating whether it is an earthquake or a shock based on the acceleration value of acceleration sensor 10 and simultaneously obtaining the seismic intensity equivalent value indicating the magnitude of an earthquake.

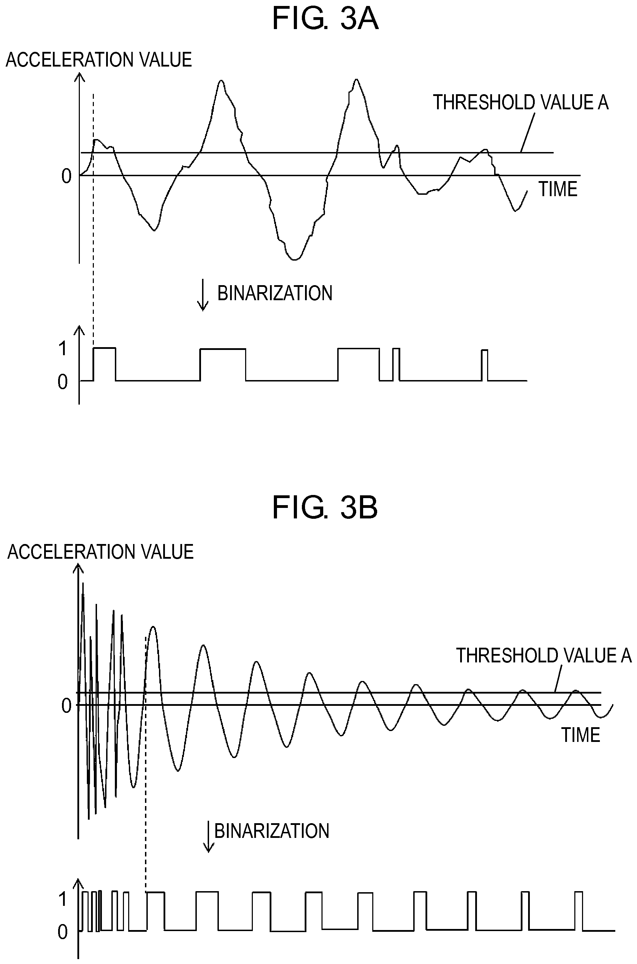

Next, by using FIG. 3A and FIG. 3B, a specific discrimination method for an earthquake and a shock in earthquake determining unit 11 will be exemplified.

FIG. 3A illustrates an acceleration waveform due to seismic vibrations and a graph in which this acceleration waveform is binarized into 0 and 1 with threshold value A (one more than or equal to threshold value A is 1, and one less than threshold value A is 0). FIG. 3B illustrates an acceleration waveform due to shock vibrations and a graph in which this acceleration waveform is binarized into 0 and 1 with threshold value A (one more than or equal to threshold value A is 1, and one less than threshold value A is 0). For example, threshold value A is 50 gal equivalent to the acceleration caused by an earthquake of seismic intensity 4. As the gas shutoff device, gas is shut off by determination of seismic intensity 5+, and thus it is preferable that the acceleration waveform be binarized before this seismic intensity is reached.

As can be seen in FIG. 3A, in seismic vibrations, it can be seen that a width of binarized value 1 is random and an occurrence timing is also random. On the other hand, in shock vibrations, as can be seen in FIG. 3B, it can be seen that an occurrence timing of binarized value 1 is almost constant, and an occurrence time of binarized value 1 gradually shortens.

Therefore, earthquake determining unit 11 can differentiate and discriminate an earthquake and a shock by this difference in pattern. By this method, by using the acceleration waveform for calculation and simultaneously binarizing it with the predetermined threshold value, the acceleration waveform can be represented by a value 0 or 1 and a time, and determination can be made more easily than analyzing the acceleration waveform itself.

A main frequency of seismic vibrations is low such as up to about 6 Hz, and a main frequency of shock vibrations of the gas shutoff device placed on a general piping of about 1 m is approximately 10 Hz. A method to remove highfrequency components with a low-pass filter by a method of digital filter to discriminate the shock vibrations is also conceivable, but this method has a complicated process to implement the low-pass filter, and becomes a burden of battery consumption.

Further, the shock vibrations vary largely in acceleration compared to seismic vibrations and are of a complex waveform including low frequency components, and have a large acceleration variation also existing in an earthquake frequency band, resulting in a calculated value equivalent to an earthquake in seismic intensity calculation. However, binarization of acceleration value enables to pattern characteristics of differences of waveforms by a simple process of comparing numeric values.

Note that although this predetermined threshold value may be a fixed value, when it is difficult to differentiate between an earthquake and a shock by magnitude of vibrations or the like, having a variable threshold value allows to more clearly extract characteristics.

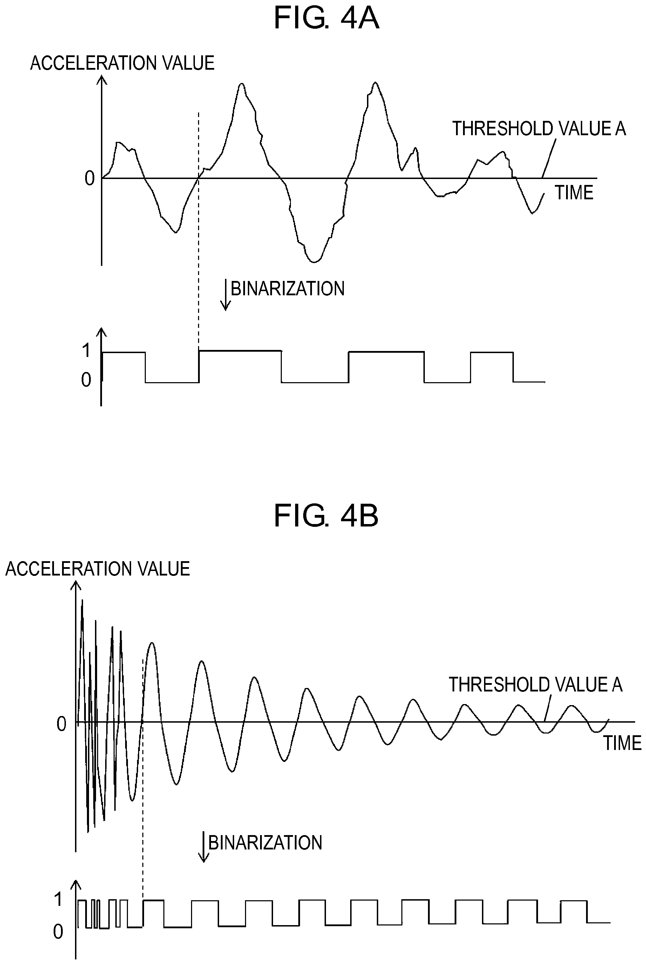

Next, another example will be described with reference to FIG. 4A and FIG. 4B. In FIG. 4A and FIG. 4B, threshold value A described above is an acceleration value of zero. FIG. 4A illustrates an acceleration waveform due to seismic vibrations and a graph in which this acceleration waveform is binarized into 0 and 1 with threshold value A (one more than or equal to threshold value A is 1, and one less than threshold value A is 0). FIG. 4B illustrates an acceleration waveform due to shock vibrations and a graph in which this acceleration waveform is binarized into 0 and 1 with threshold value A (one more than or equal to threshold value A is 1, and one less than threshold value A is 0).

As can be seen in FIG. 4A, in seismic vibrations, it can be seen that a width of binarized value 1 is random and an occurrence timing is also random. On the other hand, in shock vibrations, as can be seen in FIG. 4B, it can be seen that an occurrence timing of binarized value 1 is almost constant, and time intervals of binarized value 1 and value 0 are almost equal.

Therefore, earthquake determining unit 11 can differentiate and discriminate an earthquake and a shock by difference in pattern due to different characteristics.

Then, earthquake determining unit 11 obtains a frequency of an earthquake and a shock based on binarized data. In the case of seismic vibrations, since cycles are not constant, it is difficult to obtain a continuing repetitive cycle from binarized data. However, in the case of shock vibrations, since cycles are almost constant, a cycle can be obtained from binarized data. Then, if this cycle is peculiar to shock vibrations, it is determined that the vibrations are due to a shock.

As an example of applying this seismic device to the gas shutoff device, if intermittent quakes at a natural frequency of piping vibrations (6 Hz or more = piping length less than or equal to 130 mm) connected to the gas shutoff device is assumed, setting to 6 Hz or more enables discrimination of a shock.

### (Second Exemplary Embodiment)

Next, another example of differentiation of an earthquake and a shock in earthquake determining unit 11 will be exemplified.

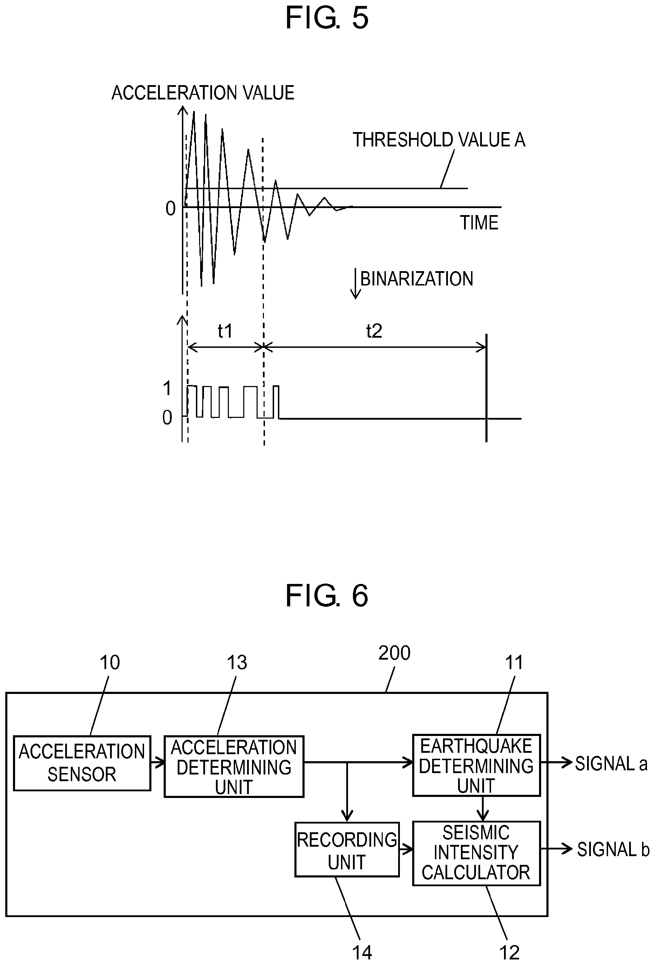

FIG. 5 illustrates an acceleration waveform when natural vibrations of piping as illustrated in FIG. 2B are not received and vibrations sporadically cease in a short period in another case of shock vibrations, and a graph of binarization of the acceleration waveform with threshold value A.

In the case of such sporadic shock vibrations, it is difficult to find a cycle or regularity as described above. However, in earthquake determining unit 11 of the present exemplary embodiment, when a value more than or equal to threshold value A (equivalent to seismic intensity 4 ≈ 50 gal) is detected, clocking of predetermined time t1 is performed, and after t1 has elapsed, another clocking of predetermined time t2 is performed. Then, the number of times the binarized data generated in this predetermined time t2 changes from value 0 to value 1 is counted, and when this count value is less than a predetermined number of times, the vibrations are discriminated as shock vibrations. In the case of this graph, the number of times the binarized data generated in predetermined time t2 changes from value 0 to value 1 is one, and since this number is less than a predetermined number of times (for example, three times), the vibrations can be determined as caused by a sporadic shock.

Note that it is assumed that predetermined time t1 is a time during which the acceleration value varies in sporadic shock vibrations, and counting is not performed while a violent acceleration change due to a shock is occurring. The time is two seconds to three seconds in the gas shutoff device. Predetermined time t2 is set to about five seconds, and predetermined time t1 + predetermined time t2 is small as compared to the duration of an earthquake. An earthquake with a short duration is generally small in its scale, and does not reach the seismic intensity that leads to shutoff of the gas shutoff device, and thus it would not be a problem if earthquake determining unit 11 erroneously determines the earthquake as a shock.

### (Third Exemplary Embodiment)

FIG. 6 illustrates a block diagram of a seismic device 200 according to a third exemplary embodiment.

Components with same reference marks as those in FIG. 1 operate similarly to those in the first exemplary embodiment, and thus descriptions thereof are omitted. The present exemplary embodiment differs from the first exemplary embodiment in that recording unit 14 that successively records acceleration values is included. In FIG. 6, acceleration determining unit 13 determines that acceleration sensor 10 has output an acceleration value more than or equal to a predetermined value, outputs the acceleration value to earthquake determining unit 11 and recording unit 14, and instructs earthquake determining unit 11 to perform determination. Recording unit 14 successively records the acceleration value output from acceleration sensor 10. Upon discrimination as an earthquake, earthquake determining unit 11 instructs seismic intensity calculator 12 to perform calculation. Seismic intensity calculator 12 reads data from recording unit 14, and calculates a seismic intensity equivalent value.

In the case of this configuration, when earthquake determining unit 11 determines shock vibrations, the seismic intensity calculation by seismic intensity calculator 12 is not performed, and thus consumption of the battery can be suppressed further. Recording unit 14 can be implemented by a RAM or a flash memory provided in a microcomputer (not illustrated).

### (Fourth Exemplary Embodiment)

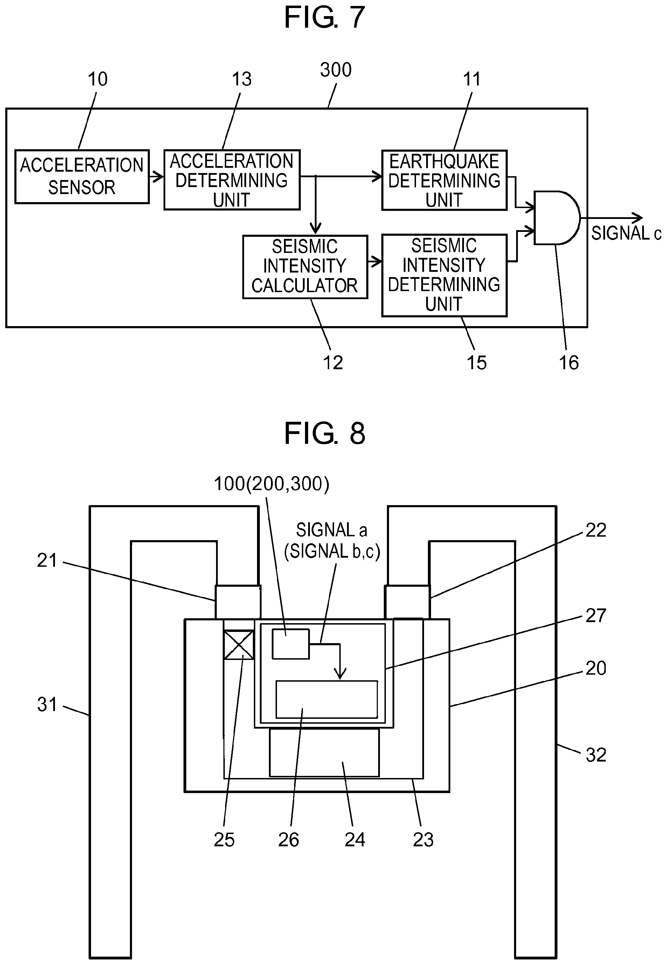

FIG. 7 illustrates a block diagram of a seismic device 300 according to a fourth exemplary embodiment.

Components with same reference marks as those in FIG. 1 operate similarly to those in the first exemplary embodiment, and thus descriptions thereof are omitted. The present exemplary embodiment differs from the first exemplary embodiment in that seismic intensity determining unit 15 and output determining unit 16 are included.

Output determining unit 16 outputs a signal c as an earthquake presence signal when earthquake determining unit 11 determines an earthquake and seismic intensity determining unit 15 determines that a seismic intensity equivalent value calculated by seismic intensity calculator 12 is more than or equal to a predetermined value.

Here, the predetermined value to be compared with the seismic intensity equivalent value is, for example, a value for determining whether to allow functioning of a safety unit of a safety device that operates the gas shutoff device. In the case of the gas shutoff device, the predetermined value is set equivalent to approximately seismic intensity 5+ as a value for making a shutoff.

Therefore, when seismic device 300 of the present exemplary embodiment is used, the safety device that has received signal c as an earthquake presence signal can immediately cause the safety unit to operate without performing signal processing.

### (Fifth Exemplary Embodiment)

FIG. 8 is a schematic diagram illustrating a gas shutoff device as a safety device according to a fifth exemplary embodiment. This safety device is equipped with one of seismic device 100 illustrated in FIG. 1, seismic device 200 illustrated in FIG. 6, and seismic device 300 illustrated in FIG. 7.

In the diagram, gas shutoff device 20 includes inlet 21 connected to piping 31 for introducing gas, outlet 22 to which piping 32 for delivering gas is connected, and gas flow passage 23 formed in a U shape and configured between inlet 21 and outlet 22. Further, gas shutoff device 20 includes flow rate measuring unit 24 disposed in a middle part of gas flow passage 23 and measuring a flow rate of gas, and shutoff valve 25 as a safety unit disposed upstream of flow rate measuring unit 24 and blocking gas when abnormality is detected. Furthermore, gas shutoff device 20 includes circuit board 27 on which control circuit 26 is mounted to calculate gas flow rate from a detection signal of flow rate measuring unit 24, determine presence of abnormality, and drive shutoff valve 25 when abnormality is detected.

Seismic device 100 (200, 300) is mounted on this circuit board 27 and outputs signal a as earthquake determination signal, signal b as seismic intensity equivalent value, or signal c as earthquake presence signal to control circuit 26. When control circuit 26 receives signal a and signal b and determines that the earthquake determination signal of signal a is of an earthquake (not a shock) and the seismic intensity equivalent value of signal b is a value to shut off gas (equivalent to approximately seismic intensity 5+), control circuit 26 can activate shutoff valve 25 to shut off gas, thereby securing safety.

Further, when the earthquake determination signal of signal a is not an earthquake, control circuit 26 does not shut off gas even if the seismic intensity equivalent value is equivalent to seismic intensity 5 or larger, and thus shutoff of gas due to daily-life vibrations (noise) such as piping vibrations by a shock does not occur, thereby improving convenience.

Further, upon reception of signal c as an earthquake presence signal, control circuit 26 can immediately activate shutoff valve 25 to shut off gas.

Note that since earthquake determining unit 11, seismic intensity calculator 12, acceleration determining unit 13, and recording unit 14 can be implemented by processing and a RAM of a microcomputer, similar effects can be obtained by implementing processing of the present seismic device in the microcomputer included in control circuit 26 of gas shutoff device 20.

Note that signal a and signal b are not limited to the seismic intensity equivalent value as long as it can be detected by seismic device 100, such as one including presence of shock. For example, although not explained in the present exemplary embodiment, by configuring the seismic device to be able to discriminate a shock by a drop and transmitting the presence of the drop as signal a, signal b, and signal c to control circuit 26, control circuit 26 can perform an appropriate response such as notifying a possibility of damage due to dropping of the gas shutoff device by a display or the like.

As above, by mounting the seismic device according to the exemplary embodiment in a safety device, the function of the safety unit can be exhibited only when necessary.

As described above, a seismic device according to a first disclosure includes an acceleration sensor that successively outputs an acceleration value corresponding to a magnitude of acceleration of vibration appoied to the seismic device, an earthquake determining unit that determine whether the vibration is an earthquake or a shock from the acceleration value output from the acceleration sensor, and a seismic intensity calculator that calculates a seismic intensity equivalent value from the acceleration value output from the acceleration sensor.

This configuration enables to perform discrimination of an earthquake and a shock with high precision, and calculate intensity of an earthquake.

A seismic device according to a second disclosure may be configured such that, particularly in the first disclosure, the earthquake determining unit determine whether the vibration is an earthquake or a shock from a generation pattern of binary values (0 and 1) obtained by binarizing the acceleration value with a predetermined threshold value.

With this configuration, pattern determination of acceleration can be simplified, and processing by a microcomputer becomes easy.

In a seismic device according to a third disclosure, particularly in the second disclosure, the predetermined threshold value may be an acceleration value of zero.

A seismic device according to a fourth disclosure may be configured such that, particularly in the second disclosure, the earthquake determining unit obtains from the generation pattern a frequency having a change of a binary value in a predetermined period, and determines that the vibration is a shock when the frequency has a binary value more than or equal to a predetermined value.

A seismic device according to a fifth disclosure may be configured such that, particularly in the third disclosure, the earthquake determining unit obtains from the generation pattern a frequency having a change of a binary value in a predetermined period, and determines that the vibration is a shock when the frequency has a binary value more than or equal to a predetermined value.

A seismic device according to a sixth disclosure may be configured such that, particularly in the second disclosure, the earthquake determining unit determines that the vibration is a shock when a number of times a value binarized with the predetermined threshold value changes from a value (0) that is less than the predetermined threshold value to a value (1) that is more than or equal to the predetermined threshold value is less than a predetermined number of times during a predetermined period.

A seismic device according to a seventh disclosure may be configured such that, particularly in the third disclosure, the earthquake determining unit determines that the vibration is a shock when a number of times a value binarized with the predetermined threshold value changes from a value (0) that is less than the predetermined threshold value to a value (1) that is more than or equal to the predetermined threshold value is less than a predetermined number of times during a predetermined period.

A seismic device according to an eighth disclosure may be configured to include, particularly in any one of the first to seventh disclosures, a recording unit that records the acceleration value that is successively output, wherein when the earthquake determining unit determines that the vibration is an earthquake, the seismic intensity calculator calculates a seismic intensity equivalent value by using the acceleration value recorded in the recording unit.

A seismic device according to a ninth disclosure may be configured such that, particularly in any one of the first to seventh disclosures, the seismic intensity calculator calculates a seismic intensity equivalent value when the acceleration sensor outputs an acceleration value more than or equal to a predetermined value.

A seismic device according to a tenth disclosure may be configured such that, particularly in the eighth disclosure, the seismic intensity calculator calculates a seismic intensity equivalent value when the acceleration sensor outputs an acceleration value more than or equal to a predetermined value.

A seismic device according to an eleventh disclosure may be configured to include, particularly in any one of the first to seventh disclosures, a seismic intensity determining unit that determines whether or not the seismic intensity equivalent value calculated by the seismic intensity calculator is more than or equal to a predetermined value, wherein an earthquake presence signal is output when the seismic intensity determining unit determines that the seismic intensity equivalent value is more than or equal to the predetermined value and the earthquake determining unit determines that the vibration is an earthquake.

A seismic device according to a twelfth disclosure may be configured to include, particularly in the eighth disclosure, a seismic intensity determining unit that determines whether or not the seismic intensity equivalent value calculated by the seismic intensity calculator is more than or equal to a predetermined value, wherein an earthquake presence signal is output when the seismic intensity determining unit determines that the seismic intensity equivalent value is more than or equal to the predetermined value and the earthquake determining unit determines that the vibration is an earthquake.

A seismic device according to a thirteenth disclosure may be configured to include, particularly in the ninth disclosure, a seismic intensity determining unit that determines whether or not the seismic intensity equivalent value calculated by the seismic intensity calculator is more than or equal to a predetermined value, wherein an earthquake presence signal is output when the seismic intensity determining unit determines that the seismic intensity equivalent value is more than or equal to the predetermined value and the earthquake determining unit determines that the vibration is an earthquake.

A seismic device according to a fourteenth disclosure may be configured to include, particularly in the tenth disclosure, a seismic intensity determining unit that determines whether or not the seismic intensity equivalent value calculated by the seismic intensity calculator is more than or equal to a predetermined value, wherein an earthquake presence signal is output when the seismic intensity determining unit determines that the seismic intensity equivalent value is more than or equal to the predetermined value and the earthquake determining unit determines that the vibration is an earthquake.

A safety device according to a fifteenth disclosure may be configured to have the seismic device particularly according to any one of the first to fourteenth disclosure and a safety unit that secures safety when an earthquake occurs, wherein the safety unit is activated when the seismic intensity equivalent value is more than or equal to a predetermined value and the earthquake determining unit determines that the vibration is an earthquake.

### INDUSTRIAL APPLICABILITY

As described above, a seismic device according to the invention of the present application can reliably discriminate an earthquake and output a seismic intensity equivalent value, and hence can be applied not only to a gas shutoff device but also to a safety device that shuts off power or shuts off water upon an earthquake, or the like.

### REFERENCE MARKS IN THE DRAWINGS

- 10: acceleration sensor
- 11: earthquake determining unit
- 12: seismic intensity calculator
- 13: acceleration determining unit
- 14: recording unit
- 15: seismic intensity determining unit
- 20: gas shutoff device (safety device)
- 25: shutoff valve (safety unit)
- 100, 200, 300: seismic device

## Claims

1. A seismic device comprising:
an acceleration sensor that successively outputs an acceleration value corresponding to a magnitude of acceleration of vibration applied to the seismic device;
an earthquake determining unit that determine whether the vibration is an earthquake or a shock from the acceleration value output from the acceleration sensor; and
a seismic intensity calculator that calculates a seismic intensity equivalent value from the acceleration value output from the acceleration sensor.

2. The seismic device according to claim 1, wherein the earthquake determining unit determine whether the vibration is an earthquake or a shock from a generation pattern of binary values obtained by binarizing the acceleration value with a predetermined threshold value, the binary values each being 0 or 1.

3. The seismic device according to claim 2, wherein the predetermined threshold value is an acceleration value of zero.

4. The seismic device according to claim 2, wherein the earthquake determining unit obtains from the generation pattern a frequency having a change of a binary value in a predetermined period, and determines that the vibration is a shock when the frequency has a binary value more than or equal to a predetermined value.

5. The seismic device according to claim 3, wherein the earthquake determining unit obtains from the generation pattern a frequency having a change of a binary value in a predetermined period, and determines that the vibration is a shock when the frequency has a binary value more than or equal to a predetermined value.

6. The seismic device according to claim 2, wherein the earthquake determining unit determines that the vibration is a shock when a number of times a value binarized with the predetermined threshold value changes from a value of 0 that is less than the predetermined threshold value to a value of 1 that is more than or equal to the predetermined threshold value is less than a predetermined number of times during a predetermined period.

7. The seismic device according to claim 3, wherein the earthquake determining unit determines that the vibration is a shock when a number of times a value binarized with the predetermined threshold value changes from a value of 0 that is less than the predetermined threshold value to a value of 1 that is more than or equal to the predetermined threshold value is less than a predetermined number of times during a predetermined period.

8. The seismic device according to any one of claims 1 to 7, further comprising a recording unit that records the acceleration value that is successively output,
wherein when the earthquake determining unit determines that the vibration is an earthquake, the seismic intensity calculator calculates a seismic intensity equivalent value by using the acceleration value recorded in the recording unit.

9. The seismic device according to any one of claims 1 to 7, wherein
the seismic intensity calculator calculates a seismic intensity equivalent value when the acceleration sensor outputs an acceleration value more than or equal to a predetermined value.

10. The seismic device according to claim 8, wherein the seismic intensity calculator calculates a seismic intensity equivalent value when the acceleration sensor outputs an acceleration value more than or equal to a predetermined value.

11. The seismic device according to any one of claims 1 to 7, further comprising a seismic intensity determining unit that determines whether or not the seismic intensity equivalent value calculated by the seismic intensity calculator is more than or equal to a predetermined value,
wherein an earthquake presence signal is output when the seismic intensity determining unit determines that the seismic intensity equivalent value is more than or equal to the predetermined value and the earthquake determining unit determines that the vibration is an earthquake.

12. The seismic device according to claim 8, further comprising a seismic intensity determining unit that determines whether or not the seismic intensity equivalent value calculated by the seismic intensity calculator is more than or equal to a predetermined value,
wherein an earthquake presence signal is output when the seismic intensity determining unit determines that the seismic intensity equivalent value is more than or equal to the predetermined value and the earthquake determining unit determines that the vibration is an earthquake.

13. The seismic device according to claim 9, further comprising a seismic intensity determining unit that determines whether or not the seismic intensity equivalent value calculated by the seismic intensity calculator is more than or equal to a predetermined value,
wherein an earthquake presence signal is output when the seismic intensity determining unit determines that the seismic intensity equivalent value is more than or equal to the predetermined value and the earthquake determining unit determines that the vibration is an earthquake.

14. The seismic device according to claim 10, further comprising a seismic intensity determining unit that determines whether or not the seismic intensity equivalent value calculated by the seismic intensity calculator is more than or equal to a predetermined value,
wherein an earthquake presence signal is output when the seismic intensity determining unit determines that the seismic intensity equivalent value is more than or equal to the predetermined value and the earthquake determining unit determines that the vibration is an earthquake.

15. A safety device comprising:
the seismic device according to any one of claims 1 to 14; and
a safety unit that secures safety when an earthquake occurs,
wherein the safety unit is activated when the seismic intensity equivalent value is more than or equal to a predetermined value and the earthquake determining unit determines that the vibration is a n earthquake.
